# EUROPÄISCHE PATENTSCHRIFT

(11) **EP 3 963 490 B1**
(45) Veröffentlichungstag und Bekanntmachung des Hinweises auf die Patenterteilung: **19.07.2023**
(21) Anmeldenummer: 20723087.1
(22) Anmeldetag: 29.04.2020
(51) Int. Cl.: G06F 21/57, G06F 21/60

(54) **VERFAHREN UND VORRICHTUNG ZUM ÜBERTRAGEN EINES BOOT-CODES MIT VERBESSERTER DATENSICHERHEIT**
METHOD AND DEVICE FOR TRANSFERRING A BOOT CODE WITH IMPROVED DATA SECURITY
PROCÉDÉ ET DISPOSITIF DE TRANSMISSION D'UN CODE DE DÉMARRAGE À SÉCURITÉ DE DONNÉES AMÉLIORÉE

(30) Priorität: 02.05.2019 DE 102019206302
(43) Veröffentlichungstag der Anmeldung: 09.03.2022
(73) Patentinhaber: Continental Automotive Technologies GmbH, 30165 Hannover (DE)
(72) Erfinder: BIEGER, Stefan, 60488 Frankfurt am Main (DE)
(74) Vertreter: Continental Corporation
(86) Internationale Anmeldenummer: PCT/EP2020/061814
(87) Internationale Veröffentlichungsnummer: WO 2020/221776

(56) Entgegenhaltungen:
- GB-A- 2 457 172
- US-A1- 2014 068 238
- US-B1- 9 454 662

## Beschreibung

Die Erfindung betrifft ein Verfahren zum Übertragen eines Boot-Codes, mit verbesserter Datensicherheit, von einem Programmiergerät auf einen Mikrocontroller. Weiterhin betrifft die Erfindung ein Programmiergerät und einen Mikrocontroller. Außerdem betrifft die Erfindung eine Verwendung, ein Programmelement und ein computerlesbares Medium.

Ein Mikrocontroller, auf dem sich noch keine ablauffähige Software oder Firmware befindet, benötigt eine Basis-Software oder Firmware, den sog. Boot-Code, um seine Funktion erfüllen zu können. Da es sich dabei zumindest in einigen Fällen um geheimzuhaltende Software handelt, liegt diese zumindest in einigen Fällen verschlüsselt vor. Da eine verschlüsselte Software per se auf einem Computer oder Mikrocontroller nicht ablauffähig ist, muss vor dem Starten des Boot-Codes eine Entschlüsselungs-Software zur Verfügung gestellt werden. Durch das Übertragen dieser Entschlüsselungs-Software wird sowohl die Entschlüsselungs-Software als auch der verschlüsselte Boot-Code anfällig für sicherheitsrelevante Aktionen eines potentiellen Angreifers, beispielsweise für Diebstahl, unkontrolliertes Kopieren und/oder Veränderung der Entschlüsselungs-Software und/oder des Boot-Codes.

Die US 9 454 662 B1 offenbart ein Verfahren zum Starten eines vertraulichen Image auf einem vertrauenswürdigen Computersystem. Ein vertrauenswürdiges Computersystem lädt einen verschlüsselten Client-Image-Schlüssel auf einen geschützten Bereich des vertrauenswürdigen Computersystems. Das vertrauenswürdige Computersystem lädt ein verschlüsseltes Boot-Image auf eine sichere logische Partition auf dem vertrauenswürdigen Computersystem. Das vertrauenswürdige Computersystem entschlüsselt mit dem Client-Image-Schlüssel das verschlüsselte Boot-Image, um ein Boot-Image und einen Client-Datenschlüssel zu erhalten.

Es ist Aufgabe der Erfindung, die Übertragungssicherheit zumindest bei einem Teil der genannten Aktionen zu verbessern.

Diese Aufgabe wird durch den Gegenstand der unabhängigen Patentansprüche gelöst. Weiterbildungen der Erfindung ergeben sich aus den Unteransprüchen und der folgenden Beschreibung.

Gemäß einem ersten Aspekt wird ein Verfahren zum Übertragen einer Software mit verbesserter Datensicherheit von einem Programmiergerät auf einen Mikrocontroller beschrieben.

Ein Mikrocontroller ist ein Computer, der dazu eingerichtet oder geeignet ist, vordefinierte Steuerungsaufgaben durchzuführen. In zumindest einigen Ausführungsformen kann der Mikrocontroller dazu eingerichtet oder geeignet sein, als sog. "General-Purpose-Computer" zu dienen, z.B. mit den Aufgaben eines Personal Computers. Der Mikrocontroller kann ein spezialisierter Computer oder auch ein Standard-Computer sein und/oder Standard-Software und/oder spezialisierte Software zur Erfüllung zumindest eines Teils seiner intendierten Aufgaben verwenden. Bei der Software kann es sich um z.B. um Software, Firmware, Mikrocode, FPGA-lesbare Anweisungen und/oder um Dateien, die mittels irgendeiner Komponente des Mikrocontrollers dessen Ablauf bestimmen können oder könnten. Der Boot-Code kann schützenswerte Ideen und/oder Routinen enthalten und/oder geheimzuhalten sein. Der Boot-Code kann verschlüsselt vorliegen und/oder in verschlüsselter Form übertragen werden.

Das Programmiergerät ist ein Computer, welcher mindestens dazu geeignet ist, Software, Firmware und/oder andere Dateien auf den Mikrocontroller zu übertragen. Ferner ist das Programmiergerät geeignet, Routinen auszuführen, die auf der Erzeugung einer Zufallszahl basieren. Dabei wird das Programmiergerät als vertrauenswürdig eingestuft. Weiterhin liegt dem Programmiergerät mindestens ein Boot-Code und eine Entschlüsselungs-Software vor, die - gegebenenfalls nach mindestens einer weiteren Entschlüsselung - auf dem Mikrocontroller ablauffähig sind. Eine Übertragung des Boot-Codes von einem Programmiergerät auf einen Mikrocontroller kann über eine Leitung durchgeführt werden, die nicht als vertrauenswürdig eingestuft wird.

Das Verfahren zur Übertragung eines Boot-Codes von einem Programmiergerät auf einen Mikrocontroller mit verbesserter Datensicherheit weist folgende Schritte auf:
a) Erstellen, mittels des Programmiergeräts, eines ersten Public-Keys, eines ersten Private-Keys und eines Passworts.
   Das Public-Keys/Private-Key-Paar dient dabei als Basis für Verschlüsselungen. Das Erstellen der Schlüssel (Keys) und des Passworts kann die Verwendung einer Standard-Routine und/oder die Verwendung von Spezial-Hardware zur Erzeugung des Public-Key/Private-Key-Paars und der Zufallszahl umfassen.
b) Generieren, mittels des Programmiergeräts, eines Bootlader-Binary zur Ausführung auf dem Mikrocontroller, wobei das Bootlader-Binary mindestens umfasst:
   - einen Urlader zur Ausführung auf dem Mikrocontroller,
   - das Passwort,
   - den mittels des Passworts verschlüsselten ersten Public-Key,
   - eine Menge von mittels des Passworts verschlüsselten Bootlader-Routinen zur Ausführung auf dem Mikrocontroller, wobei die Menge der verschlüsselten Bootlader-Routinen umfasst:
      eine Generierungsroutine zum Generieren eines zweiten Public-Keys und eines zweiten Private-Keys, und eine Entschlüsselungsroutine zur Entschlüsselung mindestens des ersten Public-Keys;
   - eine Entschlüsselungsroutine, zur Ausführung auf dem Mikrocontroller, zur Entschlüsselung der mittels des Passworts verschlüsselten Bootlader-Routinen.

   Das Bootlader-Binary kann dabei als Zusammenstellung der aufgezählten Software-Teile realisiert sein oder als Verkettung dieser Teile. In Abwandlungen kann die Menge der mittels des Passworts verschlüsselten Bootlader-Routinen andere und/oder weitere Routinen beinhalten und insbesondere umfangreicher sein. Mindestens der Urlader weist dabei einen Code auf, der auf dem Mikrocontroller unmittelbar ablauffähig ist. Die Verschlüsselung der Menge der verschlüsselten Bootlader-Routinen kann z.B. dazu dienen, eine Manipulation der Bootlader-Routinen im Wesentlichen während der Übertragung bzw. während der Übertragungszeit ("on-the-fly Manipulation") zu verhindern.
c) Abschätzen, mittels des Programmiergeräts, einer tolerierbaren Gesamtbearbeitungsdauer, welche aus den Bearbeitungsdauern der Schritte d) bis f) besteht.
   Die Schritte d) bis f), die im Folgenden im Detail beschrieben werden, umfassen im Wesentlichen eine Übertragungszeit einer ersten Datenmenge von dem Programmiergerät an den Mikrocontroller, eine Übertragungszeit einer zweiten Datenmenge von dem Mikrocontroller an das Programmiergerät und eine definierte Bearbeitungszeit von vordefinierten Routinen, wie sie z.B. in dem oben beschriebenen Bootlader-Binary enthalten sind. Wenn das Bootlader-Binary mehr oder weniger auszuführende Routinen umfasst als die oben beschriebenen Routinen, dann kann sich die Gesamtbearbeitungsdauer entsprechend ändern. Das Abschätzen einer tolerierbaren Gesamtbearbeitungsdauer "mittels des Programmiergeräts" kann dabei beispielsweise mittels einer Routine auf dem Programmiergerät vorgenommen werden, die z.B. eine Abschätzung der Dateigrößen verwendet. Die Abschätzung kann auf einer Messreihe basieren, welche mehrfach eine Gesamtbearbeitungsdauer der Schritte d) bis f) bei Beispielübertragungen misst (oder vor der Abschätzung gemessen hat) und daraus z.B. einen Maximalwert und/oder eine zeitliche Streuung der Beispielübertragungen bestimmt. Das Abschätzen kann z.B. von einem Entwickler durchgeführt werden und/oder mittels eines Tools unterstützt werden. Die aus dieser Messreihe und/oder mittels anderer Methoden bestimmte und/oder geschätzte Gesamtbearbeitungsdauer wird dem Programmiergerät mitgeteilt; das Programmiergerät verwendet diese Zeit als geschätzte Gesamtbearbeitungsdauer. Aus der Messreihe kann auch - z.B. unter Berücksichtigung der gemessenen zeitlichen Streuung und/oder anderer Faktoren - eine tolerierbare Gesamtbearbeitungsdauer bestimmt werden.
d) Übertragen des Bootlader-Binary von dem Programmiergerät an den Mikrocontroller.
   Dabei sind in dem Bootlader-Binary die oben genannten Daten enthalten oder - in Abwandlungen - mehr oder weniger Daten bzw. auszuführende Routinen enthalten. In einer Abwandlung kann das Passwort auch getrennt von den anderen Teilen des Bootlader-Binary übertragen werden; dies kann Auswirkungen auf die geschätzte Gesamtbearbeitungsdauer haben.
e) Ausführen, mittels des Mikrocontrollers,
   des Urlader-Codes,
   der Entschlüsselungsroutine zur Entschlüsselung der mittels des Passworts verschlüsselten Bootlader-Routinen, und
   der entschlüsselten Bootlader-Routinen.

   Dabei weist der Urlader einen Code auf, der auf dem Mikrocontroller unmittelbar ablauffähig ist. Dabei kann der Urlader beispielsweise zunächst einen "Start-Code" ausführen, der z. B. von Spezifika des Mikrocontrollers abhängig sein kann. Dann kann der Urlader die Entschlüsselungsroutine ausführen, um die mittels des Passworts verschlüsselten Bootlader-Routinen zu entschlüsseln. Zur Entschlüsselung dieser Routinen kann das in dem Bootlader-Binary enthaltene (oder anderweitig übermittelte) Passwort verwendet werden. Anschließend - oder möglicherweise nach einer vordefinierten Pause - können die Bootlader-Routinen ausgeführt werden. Wenn das Bootlader-Binary die oben beschriebenen Routinen enthält, dann werden auf dem Mikrocontroller folgende Bootlader-Routinen ausgeführt:
   - eine Generierungsroutine zum Generieren eines zweiten Public-Key/Private-Key-Paars (und ggf. zum Verschlüsseln, mittels des ersten Public Keys, des zweiten Public-Keys), und
   - eine Entschlüsselungsroutine zur Entschlüsselung des ersten Public-Keys.
f) Übertragen des (ggf. verschlüsselten) zweiten Public-Keys von dem Mikrocontroller an das Programmiergerät.
g) Wenn die tatsächlichen Bearbeitungsdauern der Schritte d) bis f) außerhalb der tolerierbaren Gesamtbearbeitungsdauer liegen, Abbrechen des Verfahrens.
   Die Ablauf- und/oder Übertragungszeiten der oben beschriebenen Schritte des Verfahrens - und gegebenenfalls auch vordefinierte Variationen davon - können in einem engen Rahmen vorbestimmt und/oder mit geringen Abweichungen gemessen werden (z.B. in einer Messreihe, wie oben beschrieben). So kann beispielsweise aus einer Messreihe von Bearbeitungsdauern - z.B. unter Berücksichtigung der gemessenen zeitlichen Streuung und/oder anderer Faktoren - (z.B. in einem engen zeitlichen Rahmen) eine tolerierbare Gesamtbearbeitungsdauer für die Schritte d) bis f) bestimmt werden. Diese tolerierbare Gesamtbearbeitungsdauer kann dann mit den tatsächlichen Bearbeitungsdauern verglichen werden. Das Programmiergerät kann also z.B., beginnend mit Schritt d), auf das Ende der Übertragung von Schritt f) nur so lange warten, wie das als tolerierbare Gesamtbearbeitungsdauer bestimmt wurde.
h) Wenn die tatsächlichen Bearbeitungsdauern der Schritte d) bis f) innerhalb der tolerierbaren Gesamtbearbeitungsdauer liegen, Verschlüsseln, mittels des Programmiergeräts, des Boot-Codes mittels des zweiten Public-Keys und Übertragen eines verschlüsselten Boot-Codes von dem Programmiergerät an den Mikrocontroller.

Mit dem geschilderten Verfahren kann der Boot-Code also wesentlich sicherer an den Mikrocontroller übertragen werden. Dadurch wird zumindest wesentlich erschwert und/oder verhindert, dass ein Angreifer z.B. das Bootlader-Binary mitlesen, modifizieren und/oder ein modifiziertes Bootlader-Binary anstelle des originalen Bootlader-Binarys auf den Mikrocontroller laden kann. Dieser Vorteil ist auch dann gegeben, wenn ein potentieller Angreifer in der Lage sein sollte, die Kommunikation zwischen dem Programmiergerät und dem Mikrocontroller (und in Gegenrichtung) in Echtzeit mitzulesen und/oder zu manipulieren. Denn z.B. wegen der engen zeitlichen Rahmenbedingungen (und der Überprüfung) würde z.B. eine Unterbrechung der Übertragung durch einen potentiellen Angreifer bemerkt werden. Darüber hinaus würden Aktionen, die für eine Manipulation erforderlich wären, zu lange dauern und deshalb bemerkt werden. Diese Aktionen können z.B. das Lesen, Identifizieren, Manipulieren und Übertragen des manipulierten Bootlader-Binary umfassen. Auch ist der verschlüsselte Boot-Code schwer zu lesen und zur nicht-autorisierten Programmierung eines Mikrocontrollers zu verwenden.

In einer Ausführungsform ist die tolerierbare Gesamtbearbeitungsdauer durch eine maximale Gesamtbearbeitungsdauer, eine minimale Gesamtbearbeitungsdauer oder ein Zeitfenster zwischen der maximalen Gesamtbearbeitungsdauer und der minimalen Gesamtbearbeitungsdauer definiert.

Bei dieser Ausführungsform kann z.B. entdeckt werden, wenn ein potentieller Angreifer die Übertragung unterbricht und/oder z.B. mittels einer Routine Teile des Bootlader-Binarys ersetzt, weil dadurch die Schritte d) bis f) zu lange dauern, d.h. die tolerierbare Gesamtbearbeitungsdauer überschreiten. Bei dieser Ausführungsform kann darüber hinaus entdeckt werden, wenn ein potentieller Angreifer nach (bzw. "sofort" nach) einem Entdecken der Übertragung in Schritt d) eine Übertragung vornimmt, wie sie in Schritt f) erwartet wird; denn diese Übertragung könnte schneller erfolgen als eine minimale Gesamtbearbeitungsdauer. Die Verwendung eines Zeitfensters kann diese Vorteile kombinieren.

In einigen Ausführungsformen umfasst die Menge der verschlüsselten Bootlader-Routinen (in dem Bootlader-Binary) weiterhin eine Routine zu Erzeugung einer Pause einer vordefinierten Dauer. Diese Routine wird in Schritt e) zusätzlich zu den oben genannten Bootlader-Routinen auf dem Mikrocontroller ausgeführt. Diese Ausführungsformen können eine veränderte Gesamtbearbeitungsdauer aufweisen.

Diese Routine kann eine vordefinierte Anzahl an Wiederholungen eines Kommandos definierter Länge umfassen. Die Dauer der Pause kann mittels eines Zufallsgenerators gewählt werden. Die Dauer der Pause kann zwischen einer vordefinierten minimalen und maximalen Länge liegen. Die Dauer der Pause ist nur dem Programmiergerät bekannt; daher kann durch bei dieser Ausführungsform die Sicherheit, die durch eine Überprüfung der Gesamtbearbeitungsdauer verbessert wird, weiter verbessert werden.

In einigen Ausführungsformen umfasst die Menge der verschlüsselten Bootlader-Routinen (in dem Bootlader-Binary) weiterhin eine Ausleseschutzroutine. Diese Routine wird in Schritt e) zusätzlich zu den oben genannten Bootlader-Routinen auf dem Mikrocontroller ausgeführt. Diese Ausführungsformen können eine veränderte Gesamtbearbeitungsdauer aufweisen.

Diese Routine kann z.B. das Setzen eines Registers umfassen, das einen Ausleseschutz für bestimmte Bereiche des Speichers oder den gesamten Speicher des Mikrocontrollers bestimmt. Dies kann das Auslesen z.B. des Boot-Codes und/oder weiterer Speicherbereiche des Mikrocontrollers verhindern.

In einigen Ausführungsformen umfasst die Menge der Bootlader-Routinen weiterhin eine Routine zum Auslesen einer Seriennummer des Mikrocontrollers, und der Boot-Code umfasst weiterhin die Seriennummer, mit dem weiteren Schritt:
f1) Übertragen zusätzlich der Seriennummer von dem Mikrocontroller an das Programmiergerät. Diese Ausführungsformen können eine veränderte Gesamtbearbeitungsdauer aufweisen.

Dadurch kann z.B. gewährleistet werden, dass der Boot-Code nur auf diesem Mikrocontroller - oder ggf. auf einer Familie von Mikrocontrollern - ausgeführt wird. Die Seriennummer kann auch für weitere gezielte Modifikationen des Boot-Codes, die die z.B. für eine Familie von Mikrocontrollern nützlich und/oder erforderlich sind, genutzt werden.

In einer Ausführungsform umfasst das Bootlader-Binary weiterhin den ersten Public-Key. Weiterhin umfasst diese Ausführungsform den Schritt:
f2) Wenn der von dem Mikrocontroller gesendete erste Public-Key sich von dem, von dem Programmiergerät gesendeten, ersten Public-Key unterscheidet, Abbrechen des Verfahrens.

Der Schritt f2) wird nach dem Schritt f) - und ggf. nach Schritt f1) - und vor den Schritten g) bzw. h) durchgeführt. Diese Ausführungsform kann eine veränderte Gesamtbearbeitungsdauer aufweisen.

Durch diese Überprüfung wird die Wahrscheinlichkeit einer Entdeckung einer Manipulation weiter erhöht.

Ein weiterer Aspekt betrifft ein Programmiergerät zur Übertragung eines Boot-Codes, mit verbesserter Datensicherheit, zu einem Mikrocontroller, wobei das Programmiergerät dazu eingerichtet ist,
einen ersten Private-Key und ein Passwort zu erstellen;
ein Bootlader-Binary zur Ausführung auf dem Mikrocontroller zu generieren, wobei das Bootlader-Binary mindestens umfasst:
   - einen Urlader,
   - das Passwort,
   - den mittels des Passworts verschlüsselten ersten Public-Key,
   - eine Menge von mittels des Passworts verschlüsselten Bootlader-Routinen zur Ausführung auf dem Mikrocontroller, wobei die Menge der verschlüsselten Bootlader-Routinen umfasst:
      eine Generierungsroutine zum Generieren eines zweiten Public-Keys und eines zweiten Private-Keys, und
      eine Entschlüsselungsroutine zur Entschlüsselung des ersten Public-Keys; und
   - eine Entschlüsselungsroutine, zur Ausführung auf dem Mikrocontroller, zur Entschlüsselung der mittels des Passworts verschlüsselten Bootlader-Routinen; eine tolerierbare Gesamtbearbeitungsdauer abzuschätzen;
das Bootlader-Binary von dem Programmiergerät an den Mikrocontroller zu übertragen;
von dem Mikrocontroller mindestens einen zweiten Public-Key zu empfangen; wenn die tatsächlichen Bearbeitungsdauern von dem Übertragen des Bootlader-Binary bis zu dem Empfangen des zweiten Public-Keys außerhalb der tolerierbaren Gesamtbearbeitungsdauer liegen, abbrechen des Verfahrens; und
wenn die tatsächlichen Bearbeitungsdauern von dem Übertragen des Bootlader-Binary bis zu dem Empfangen des zweiten Public-Keys innerhalb der tolerierbaren Gesamtbearbeitungsdauer liegen, verschlüsseln des Boot-Codes mittels des zweiten Public-Keys und übertragen des verschlüsselten Boot-Codes an den Mikrocontroller.

Ein weiterer Aspekt betrifft einen Mikrocontroller zur Übertragung eines Boot-Codes, mit verbesserter Datensicherheit, von einem Programmiergerät, wobei der Mikrocontroller dazu eingerichtet ist, ein Bootlader-Binary von dem Programmiergerät zu empfangen, wobei das Bootlader-Binary mindestens einen Urlader-Code, das Passwort, eine Entschlüsselungsroutine zur Entschlüsselung von mittels des Passworts verschlüsselten Bootlader-Routinen, und eine Menge von mittels des Passworts verschlüsselten Bootlader-Routinen umfasst;
den Urlader-Code, die Entschlüsselungsroutine, und die entschlüsselten Bootlader-Routinen auszuführen;
mindestens den zweiten Public-Key an das Programmiergerät zu übertragen; und einen verschlüsselten Boot-Code von dem Programmiergerät zu empfangen.

Ein weiterer Aspekt betriff eine Verwendung eines Programmiergeräts wie oben und/oder nachfolgend beschrieben, eines Mikrocontrollers wie oben und/oder nachfolgend beschrieben und/oder eines Verfahrens wie oben und/oder nachfolgend beschrieben zur Übertragung eines Boot-Codes, mit verbesserter Datensicherheit, von dem Programmiergerät zu dem Mikrocontroller.

Ein weiterer Aspekt betriff ein Programmelement, welches, wenn es auf einem Programmiergerät ausgeführt wird, das Programmiergerät anleitet, das Verfahren wie oben und/oder nachfolgend beschrieben durchzuführen.

Ein weiterer Aspekt betriff ein computerlesbares Medium, auf dem ein Programmelement wie oben beschrieben gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

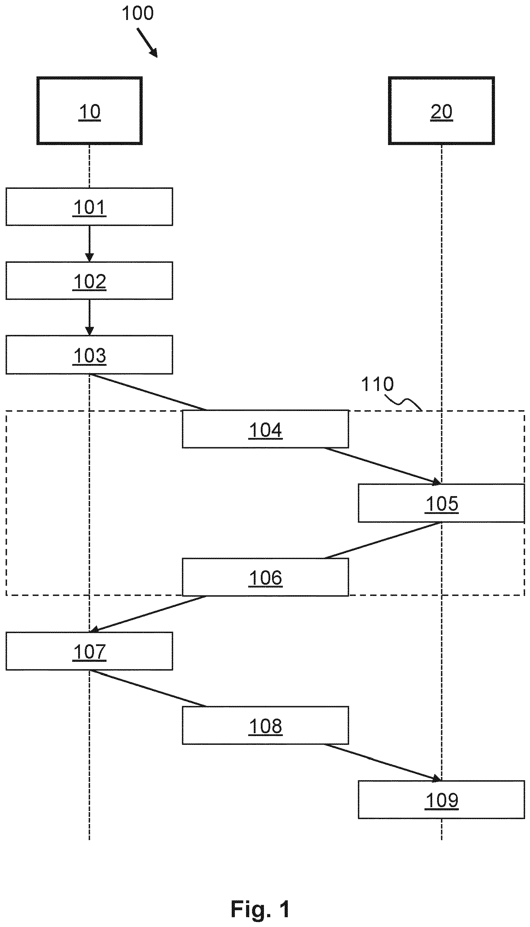

- **Fig. 1**: zeigt schematisch ein Message Sequence Diagramm nach einer Ausführungsform.

Fig. 1 zeigt ein Message-Sequence Diagramm (Message Sequence Chart, MSC) 100, das schematisch eine Ausführungsform eines Verfahrens zur Übertragung eines Boot-Codes, mit verbesserter Datensicherheit, von einem Programmiergerät 10 zu einem Mikrocontroller 20 skizziert. Das Programmiergerät 10 ist ein Computer, welcher mindestens dazu geeignet ist, Software, Firmware und/oder andere Dateien auf den Mikrocontroller zu übertragen. Ferner ist das Programmiergerät 10 geeignet, Routinen auszuführen, die auf der Erzeugung einer Zufallszahl basieren. Der Mikrocontroller 20 ist ein Computer, der dazu eingerichtet oder geeignet ist, vordefinierte Steuerungsaufgaben durchzuführen. Dazu benötigt der Mikrocontroller 20 eine Basis-Software oder Firmware, den sog. Boot-Code, um seine Funktion erfüllen zu können. Wenn sich auf dem Mikrocontroller 20 noch keine ablauffähige Software oder Firmware befindet, benötigt der Mikrocontroller 20 eine Basis-Software oder Firmware, den sog. Boot-Code.

In einem Schritt 101 erstellt das Programmiergerät 10 einen ersten Public-Key, einen ersten Private-Key und ein Passwort. In einem Schritt 102 generiert das Programmiergerät 10 ein Bootlader-Binary, das zur Ausführung auf dem Mikrocontroller 20 geeignet ist. Das Bootlader-Binary umfasst mindestens einen Urlader zur Ausführung auf dem Mikrocontroller 20, das Passwort, den mittels des Passworts verschlüsselten ersten Public-Key, eine Menge von mittels des Passworts verschlüsselten Bootlader-Routinen, die zur Ausführung auf dem Mikrocontroller 20 geeignet sind, und eine Entschlüsselungsroutine, die zur Ausführung auf dem Mikrocontroller geeignet ist, zur Entschlüsselung der mittels des Passworts verschlüsselten Bootlader-Routinen. Dabei umfasst die Menge der verschlüsselten Bootlader-Routinen mindestens eine Generierungsroutine zum Generieren eines zweiten Public-Keys und eines zweiten Private-Keys, und eine Entschlüsselungsroutine zur Entschlüsselung des ersten Public-Keys. Darüber hinaus kann die Menge der verschlüsselten Bootlader-Routinen, optional, beispielsweise noch eine Routine zur Erzeugung einer Pause einer vordefinierten Dauer, eine Ausleseschutzroutine, eine Routine zum Auslesen einer Seriennummer des Mikrocontrollers und/oder weitere Routinen umfassen, die zur Ausführung auf dem Mikrocontroller 20 geeignet sind. Die Pause wird vorteilhafterweise durch das Ausführen von Funktionen erzeugt, die ein für den jeweiligen Mikrocontroller charakteristisches Laufzeitverhalten haben. So ist die Pausendauer als identifizierbares Merkmal des Mikrocontrollers zu verstehen.

In einem Schritt 103 schätzt das Programmiergerät 10 eine tolerierbare Gesamtbearbeitungsdauer 110, welche aus den Bearbeitungsdauern der folgenden Schritte 104 bis 106 (markiert durch den gestrichelten Kasten 110) besteht. Das Abschätzen kann dabei z.B. auf Statistiken von Zeitdauern einer zuvor durchgeführten Messreihe zugreifen. In einem Schritt 104 wird das Bootlader-Binary von dem Programmiergerät 10 an den Mikrocontroller 20 übertragen. Das Übertragen kann z.B. von dem Programmiergerät 10 initiiert und/oder durchgeführt werden.

In einem Schritt 105 führt der Mikrocontroller 20 den Urlader-Code, die Entschlüsselungsroutine zur Entschlüsselung der mittels des Passworts verschlüsselten Bootlader-Routinen und mindestens einen Teil der Menge der mittels des Passworts verschlüsselten Bootlader-Routinen aus. In einem Schritt 106 wird mindestens der zweiten Public-Key von dem Mikrocontroller 20 an das Programmiergerät 10 übertragen. Das Übertragen kann z.B. von dem Mikrocontroller 20 initiiert und/oder durchgeführt werden.

In einem Schritt 107 überprüft das Programmiergerät 10 die tatsächlichen Bearbeitungsdauern der Schritte 104 bis 106. Wenn die tatsächlichen Bearbeitungsdauern der Schritte 104 bis 106 außerhalb der tolerierbaren Gesamtbearbeitungsdauer liegen, wird das Verfahren abgebrochen (in dem MSC nicht dargestellt). Abhängig von den Bootlader-Routinen und/oder weiteren Plausibilitätschecks und/oder Überprüfungen kann das Verfahren auch an weiteren Stellen abgebrochen werden.

Wenn die tatsächlichen Bearbeitungsdauern der Schritte 104 bis 106 innerhalb der tolerierbaren Gesamtbearbeitungsdauer liegen, wird der Boot-Codes mittels des zweiten Public-Keys verschlüsselt und, in einem Schritt 108, der verschlüsselte Boot-Code von dem Programmiergerät 10 an den Mikrocontroller 20 übertragen. In einem Schritt 109 kann dann, auf dem Mikrocontroller 20, der Boot-Code und/oder weitere Programmstücke ausgeführt werden.

### Liste der Bezugszeichen

- 10: Programmiergerät
- 20: Mikrocontroller
- 100: Message-Sequence Diagramm (MSC)
- 101 - 109: Schritte
- 110: tolerierbare Gesamtbearbeitungsdauer

## Patentansprüche

1. Verfahren zur Übertragung eines Boot-Codes, mit verbesserter Datensicherheit, von einem Programmiergerät (10) zu einem Mikrocontroller (20), mit den Schritten:
a) Erstellen, mittels des Programmiergeräts (10), eines ersten Public-Keys, eines ersten Private-Keys und eines Passworts;
b) Generieren, mittels des Programmiergeräts (10), eines Bootlader-Binary zur Ausführung auf dem Mikrocontroller (20), wobei das Bootlader-Binary mindestens umfasst:
- einen Urlader zur Ausführung auf dem Mikrocontroller (20),
- das Passwort,
- den mittels des Passworts verschlüsselten ersten Public-Key,
- eine Menge von mittels des Passworts verschlüsselten Bootlader-Routinen zur Ausführung auf dem Mikrocontroller (20), wobei die Menge der verschlüsselten Bootlader-Routinen umfasst:
eine Generierungsroutine zum Generieren eines zweiten Public-Keys und eines zweiten Private-Keys, und
eine Entschlüsselungsroutine zur Entschlüsselung des ersten Public-Keys; und
- eine Entschlüsselungsroutine, zur Ausführung auf dem Mikrocontroller, zur Entschlüsselung der mittels des Passworts verschlüsselten Bootlader-Routinen;
c) Abschätzen, mittels des Programmiergeräts (10), einer tolerierbaren Gesamtbearbeitungsdauer, welche aus den Bearbeitungsdauern der Schritte d) bis f) besteht.
d) Übertragen des Bootlader-Binary von dem Programmiergerät (10) an den Mikrocontroller (20);
e) Ausführen, mittels des Mikrocontrollers (20),
des Urlader-Codes,
der Entschlüsselungsroutine zur Entschlüsselung der mittels des Passworts verschlüsselten Bootlader-Routinen, und
der entschlüsselten Bootlader-Routinen;
f) Übertragen mindestens des zweiten Public-Keys von dem Mikrocontroller (20) an das Programmiergerät (10);
g) Wenn die tatsächlichen Bearbeitungsdauern der Schritte d) bis f) außerhalb der tolerierbaren Gesamtbearbeitungsdauer liegen, Abbrechen des Verfahrens; und
h) Wenn die tatsächlichen Bearbeitungsdauern der Schritte d) bis f) innerhalb der tolerierbaren Gesamtbearbeitungsdauer liegen,
Verschlüsseln, mittels des Programmiergeräts (10), des Boot-Codes mittels des zweiten Public-Keys und Übertragen eines verschlüsselten Boot-Codes von dem Programmiergerät (10) an den Mikrocontroller (20).

2. Verfahren nach Anspruch 1,
wobei die tolerierbare Gesamtbearbeitungsdauer durch eine maximale Gesamtbearbeitungsdauer, eine minimale Gesamtbearbeitungsdauer oder ein Zeitfenster zwischen der maximalen Gesamtbearbeitungsdauer und der minimalen Gesamtbearbeitungsdauer definiert ist.

3. Verfahren nach Anspruch 1 oder 2,
wobei die Menge der verschlüsselten Bootlader-Routinen weiterhin eine Routine zur Erzeugung einer Pause einer vordefinierten Dauer umfasst.

4. Verfahren nach einem der vorhergehenden Ansprüche,
wobei die Menge der verschlüsselten Bootlader-Routinen weiterhin eine Ausleseschutzroutine umfasst.

5. Verfahren nach einem der vorhergehenden Ansprüche,
wobei die Menge der Bootlader-Routinen weiterhin eine Routine zum Auslesen einer Seriennummer des Mikrocontrollers umfasst, und wobei der Boot-Code weiterhin die Seriennummer umfasst, mit dem weiteren Schritt:
f1) Übertragen zusätzlich der Seriennummer von dem Mikrocontroller (20) an das Programmiergerät (10).

6. Verfahren nach einem der vorhergehenden Ansprüche, wobei das Bootlader-Binary weiterhin den ersten Public-Key umfasst, mit dem weiteren Schritt:
f2) Wenn der von dem Mikrocontroller (20) gesendete erste Public-Key sich von dem, von dem Programmiergerät (10) gesendeten, ersten Public-Key unterscheidet, Abbrechen des Verfahrens.

7. Programmiergerät (10) zur Übertragung eines Boot-Codes, mit verbesserter Datensicherheit, zu einem Mikrocontroller (20), wobei das Programmiergerät (10) dazu eingerichtet ist,
einen ersten Private-Key und ein Passwort zu erstellen;
ein Bootlader-Binary zur Ausführung auf dem Mikrocontroller (20) zu generieren, wobei das Bootlader-Binary mindestens umfasst:
- einen Urlader,
- das Passwort,
- den mittels des Passworts verschlüsselten ersten Public-Key,
- eine Menge von mittels des Passworts verschlüsselten Bootlader-Routinen zur Ausführung auf dem Mikrocontroller (20), wobei die Menge der verschlüsselten Bootlader-Routinen umfasst:
eine Generierungsroutine zum Generieren eines zweiten Public-Keys und eines zweiten Private-Keys, und
eine Entschlüsselungsroutine zur Entschlüsselung des ersten Public-Keys; und
- eine Entschlüsselungsroutine, zur Ausführung auf dem Mikrocontroller, zur Entschlüsselung der mittels des Passworts verschlüsselten Bootlader-Routinen;
eine tolerierbare Gesamtbearbeitungsdauer abzuschätzen;
das Bootlader-Binary von dem Programmiergerät (10) an den Mikrocontroller (20) zu übertragen;
von dem Mikrocontroller (20) mindestens einen zweiten Public-Key zu empfangen;
wenn die tatsächlichen Bearbeitungsdauern von dem Übertragen des Bootlader-Binary bis zu dem Empfangen des zweiten Public-Keys außerhalb der tolerierbaren Gesamtbearbeitungsdauer liegen, abbrechen des Verfahrens; und
wenn die tatsächlichen Bearbeitungsdauern von dem Übertragen des Bootlader-Binary bis zu dem Empfangen des zweiten Public-Keys innerhalb der tolerierbaren Gesamtbearbeitungsdauer liegen, verschlüsseln des Boot-Codes mittels des zweiten Public-Keys und übertragen des verschlüsselten Boot-Codes an den Mikrocontroller (20).

8. Programmelement, welches, wenn es auf einem Programmiergerät (10) ausgeführt wird, das Programmiergerät (10) anleitet, das Verfahren nach einem der Ansprüche 1 bis 6 durchzuführen.

9. Computerlesbares Medium, auf dem ein Programmelement nach Anspruch 8 gespeichert ist.

## Claims

1. Method for transmitting a boot code, with improved data security, from a programming device (10) to a microcontroller (20), having the steps of:
a) creating, by means of the programming device (10), a first public key, a first private key and a password;
b) generating, by means of the programming device (10), a bootloader binary for execution on the microcontroller (20), the bootloader binary comprising at least:
- a bootstrap loader for execution on the microcontroller (20),
- the password,
- the first public key encrypted by means of the password,
- a set of bootloader routines encrypted by means of the password for execution on the microcontroller (20), the set of encrypted bootloader routines comprising:
a generation routine for generating a second public key and a second private key, and
a decryption routine for decrypting the first public key; and
- a decryption routine, for execution on the microcontroller, for decrypting the bootloader routines encrypted by means of the password;
c) estimating, by means of the programming device (10), a tolerable total processing time, which consists of the processing times of steps d) to f);
d) transmitting the bootloader binary from the programming device (10) to the microcontroller (20);
e) executing, by means of the microcontroller (20),
the bootstrap loader code,
the decryption routine for decrypting the bootloader routines encrypted by means of the password, and
the decrypted bootloader routines;
f) transmitting at least the second public key from the microcontroller (20) to the programming device (10);
g) if the actual processing times of steps d) to f) are outside the tolerable total processing time, terminating the method; and
h) if the actual processing times of steps d) to f) are within the tolerable total processing time,
encrypting, by means of the programming device (10), the boot code by means of the second public key and transmitting an encrypted boot code from the programming device (10) to the microcontroller (20).

2. Method according to Claim 1,
wherein the tolerable total processing time is defined by a maximum total processing time, a minimum total processing time or a time window between the maximum total processing time and the minimum total processing time.

3. Method according to Claim 1 or 2,
wherein the set of encrypted bootloader routines further comprises a routine for producing a pause of a predefined duration.

4. Method according to one of the preceding claims,
wherein the set of encrypted bootloader routines further comprises a read protection routine.

5. Method according to one of the preceding claims,
wherein the set of bootloader routines further comprises a routine for reading a serial number of the microcontroller, and
wherein the boot code further comprises the serial number, having the further step of:
f1) additionally transmitting the serial number from the microcontroller (20) to the programming device (10).

6. Method according to one of the preceding claims, wherein the bootloader binary further comprises the first public key, having the further step of:
f2) if the first public key sent by the microcontroller (20) differs from the first public key sent by the programming device (10), terminating the method.

7. Programming device (10) for transmitting a boot code, with improved data security, to a microcontroller (20), the programming device (10) being designed to create a first private key and a password;
generate a bootloader binary for execution on the microcontroller (20), the bootloader binary comprising at least:
- a bootstrap loader,
- the password,
- the first public key encrypted by means of the password,
- a set of bootloader routines encrypted by means of the password for execution on the microcontroller (20), the set of encrypted bootloader routines comprising:
a generation routine for generating a second public key and a second private key, and
a decryption routine for decrypting the first public key; and
- a decryption routine, for execution on the microcontroller, for decrypting the bootloader routines encrypted by means of the password;
estimate a tolerable total processing time;
transmit the bootloader binary from the programming device (10) to the microcontroller (20);
receive at least one second public key from the microcontroller (20);
if the actual processing times from the transmitting of the bootloader binary to the receiving of the second public key are outside the tolerable total processing time, terminate the method; and
if the actual processing times from the transmitting of the bootloader binary to the receiving of the second public key are within the tolerable total processing time, encrypt the boot code by means of the second public key and transmit the encrypted boot code to the microcontroller (20).

8. Program element that, when executed on a programming device (10), instructs the programming device (10) to carry out the method according to one of Claims 1 to 6.

9. Computer-readable medium on which a program element according to Claim 8 is stored.

## Revendications

1. Procédé de transmission d'un code de démarrage, avec une sécurité des données améliorée, d'un programmateur (10) à un microcontrôleur (20), comprenant les étapes suivantes :
a) création, au moyen du programmateur (10), d'une première clé publique, d'une première clé privée et d'un mot de passe ;
b) génération, au moyen du programmateur (10), d'un fichier binaire de programme d'amorçage destiné à être exécuté sur le microcontrôleur (20), le fichier binaire de programme d'amorçage comprenant au moins :
- un programme d'amorçage destiné à être exécuté sur le microcontrôleur (20),
- le mot de passe,
- la première clé publique cryptée au moyen du mot de passe,
- un ensemble de routines de programme d'amorçage cryptées au moyen du mot de passe destinées à être exécuté sur le microcontrôleur (20), l'ensemble de routines de programme d'amorçage comprenant :
une routine de génération destinée à générer une deuxième clé publique et une deuxième clé privée, et
une routine de décryptage destinée à décrypter la première clé publique ; et
- une routine de décryptage, destinée à être exécuté sur le microcontrôleur et destinée à décrypter les routines de programme d'amorçage cryptées au moyen du mot de passe ;
c) estimation, au moyen du programmateur (10), d'une durée de traitement totale tolérable, qui se compose des durées de traitement des étapes d) à f) ;
d) transmission du fichier binaire de programme d'amorçage du programmateur (10) au microcontrôleur (20) ;
e) exécution, au moyen du microcontrôleur (20), du code de programme d'amorçage,
de la routine de décryptage destinée à décrypter les routines de programme d'amorçage cryptées au moyen du mot de passe et
des routines de programme d'amorçage décryptées ;
f) transmission d'au moins la deuxième clé publique du microcontrôleur (20) au programmateur (10) ;
g) lorsque les durées de traitement effectives des étapes d) à f) se trouvent en-dehors de la durée de traitement totale tolérable, interruption du procédé ; et
h) lorsque les durées de traitement effectives des étapes d) à f) se trouvent à l'intérieur de la durée de traitement totale tolérable,
cryptage, au moyen du programmateur (10), du code de programme d'amorçage au moyen de la deuxième clé publique et transmission d'un code de programme d'amorçage crypté du programmateur (10) au microcontrôleur (20).

2. Procédé selon la revendication 1,
la durée de traitement totale tolérable étant définie par une durée de traitement totale maximale, une durée de traitement totale minimale ou une fenêtre temporelle entre la durée de traitement totale maximale et la durée de traitement totale minimale.

3. Procédé selon la revendication 1 ou 2,
l'ensemble de routines de programme d'amorçage cryptées comprenant en outre une routine destinée à générer une pause ayant une durée prédéfinie.

4. Procédé selon l'une des revendications précédentes,
l'ensemble de routines de programme d'amorçage cryptées comprenant en outre une routine de protection en écriture.

5. Procédé selon l'une des revendications précédentes,
l'ensemble de routines de programme d'amorçage cryptées comprenant en outre une routine destinée à lire un numéro de série du microcontrôleur, et le code de programme d'amorçage comprenant en outre le numéro de série, avec l'étape supplémentaire suivante :
f1) transmission en plus du numéro de série du microcontrôleur (20) au programmateur (10).

6. Procédé selon l'une des revendications précédentes, le fichier binaire de programme d'amorçage comprenant en outre la première clé publique, avec l'étape supplémentaire suivante :
f2) lorsque la première clé publique envoyée par le microcontrôleur (20) est différente de la première clé publique envoyée par le programmateur (10), interruption du procédé.

7. Programmateur (10) destiné à la transmission d'un code de démarrage, avec une sécurité des données améliorée, à un microcontrôleur (20), le programmateur (10) étant conçu pour
créer une première clé publique et un mot de passe ;
générer un fichier binaire de programme d'amorçage destiné à être exécuté sur le microcontrôleur (20), le fichier binaire de programme d'amorçage comprenant au moins :
- un programme d'amorçage,
- le mot de passe,
- la première clé publique cryptée au moyen du mot de passe,
- un ensemble de routines de programme d'amorçage cryptées au moyen du mot de passe destinées à être exécuté sur le microcontrôleur (20), l'ensemble de routines de programme d'amorçage comprenant :
une routine de génération destinée à générer une deuxième clé publique et une deuxième clé privée, et
une routine de décryptage destinée à décrypter la première clé publique ; et
- une routine de décryptage, destinée à être exécuté sur le microcontrôleur et destinée à décrypter les routines de programme d'amorçage cryptées au moyen du mot de passe ;
estimer une durée de traitement totale tolérable ;
transmettre le fichier binaire de programme d'amorçage du programmateur (10) au microcontrôleur (20) ;
recevoir, de la part du microcontrôleur (20), au moins une deuxième clé publique ; lorsque les durées de traitement effectives depuis la transmission du fichier binaire de programme d'amorçage jusqu'à la réception de la deuxième clé publique se trouvent en-dehors de la durée de traitement totale tolérable, interrompre le procédé ; et
lorsque les durées de traitement effectives depuis la transmission du fichier binaire de programme d'amorçage jusqu'à la réception de la deuxième clé publique se trouvent à l'intérieur de la durée de traitement totale tolérable, crypter le code de programme d'amorçage au moyen de la deuxième clé publique et transmettre le code de programme d'amorçage crypté au microcontrôleur (20).

8. Élément de programme qui est exécuté sur le programmateur (10), qui commande le programmateur (10) à mettre en oeuvre le procédé selon l'une des revendications 1 à 6.

9. Support lisible par ordinateur sur lequel est enregistré l'élément de programme selon la revendication 8.
